# EUROPEAN PATENT SPECIFICATION

(11) **EP 1 771 285 B1**
(45) Date of publication and mention of the grant of the patent: **23.03.2016**
(21) Application number: 05775219.8
(22) Date of filing: 22.07.2005
(51) Int. Cl.: B28B 7/04, B29C 33/76

(54) **METHOD OF REMOVING A FUGITIVE PATTERN FROM A MOLD**
VERFAHREN ZUM ENTFERNEN EINES VERLORENEN MODELLS AUS EINER FORM
PROCEDE DE DEMOULAGE D'UN MODELE TEMPORAIRE

(30) Priority: 26.07.2004 US 899381
(43) Date of publication of application: 11.04.2007
(73) Proprietor: METAL CASTING TECHNOLOGY, INC., Milford New Hampshire 03055 (US)
(72) Inventor: REDEMSKE, John, A., Lyndeborough, NH 03082 (US); ULLRICH, Richard, Brookline, NH 03033 (US)
(74) Representative: Hoeger, Stellrecht & Partner Patentanwälte mbB
(86) International application number: PCT/US2005/025955
(87) International publication number: WO 2006/014789

(56) References cited:
- WO-A-2004/024369
- DE-A1- 3 841 851
- FR-A- 1 117 655
- GB-A- 2 335 157
- GB-A- 2 400 066
- SU-A1- 1 256 848
- US-A- 4 940 072
- US-A- 5 298 204
- US-A- 5 372 177
- PICKARD H: "BEST PRACTICE DEWAXING" FOUNDRY TRADE JOURNAL, INSTITUTE OF CAST METALS ENGINEERS, WEST BROMWICH, GB, vol. 177, no. 3607, 1 September 2003 (2003-09-01), pages 32-34, XP001186735 ISSN: 0015-9042

## Description

### Field of the Invention

This invention relates to method for removing a fugitive pattern from a metal casting mold.

### Background of the invention

The well-known "lost wax" investment casting process typically uses a refractory mold that is constructed by the buildup of successive layers of ceramic particles bonded with an inorganic binder on a fugitive (expendable) pattern material such as typically a wax, plastic and the like. The finished refractory mold is usually formed as a shell mold around a fugitive pattern.

The refractory shell mold residing on the fugitive pattern typically is subjected to a pattern removal operation, wherein the pattern is melted out of the shell mold. This Operation leaves an empty "'green" (unfired) refractory shell mold. The fugitive patterns materials typically have a thermal expansion rate many times greater than that of the refractory shell mold. If the fugitive pattern and refractory mold are heated uniformly, the fugitive pattern material will thermally expand more than the refractory mold. This will place the refractory shell mold under tension and will ultimately crack the shell mold. The avoidance of such shell mold crackling is why the fugitive pattern material removal has been typically conducted by methods such as a high pressure steam autoclaving or flash firing pattern removal. The removal of the fugitive pattern material by a high pressure steam autoclaving or flash firing is done to expose the outside of the refractory shell mold to high temperature. This high temperature causes heat to be conducted through the refractory shell mold more quickly so as to melt the surface of the pattern before the interior of the pattern thermally expands. This surface layer of melted pattern material extends all the way to where the pattern is exposed at the open part of the mold and accommodates the expanding pattern material inside the mold by forcing some of the liquid surface pattern material out of the mold opening. Such methods can still allow cracking of the refractory shell mold if the heat is not applied in a continuum along the surface of the fugitive pattern inside the mold. The connecting together of the refractory shell mold between adjacent patterns is one of the majorcauses of non-uniform heating of the pattern. That is, thicker regions of the refractory shell mold will hinder the application of heat to the pattern material and locally delay the melting of the surface of the pattern and disrupting of the continuum. This prevents the passage of surface liquid pattern material from a thinner mold region more remote from the mold opening than the thicker mold region. Such prevention of the passage of surface liquid pattern material causes a buildup of pattern pressure in the remote thinner mold region due to the thermal expansion of the pattern material and can lead to mold cracking. These problems require the use of a mold strong enough (e.g. thick enough) to resist the expansion pressure of the pattern material and often require the use of supplemental holes or vents through the mold to relieve pressure from unconnected expanding patterns. Stronger or thicker molds as well as the venting method are undesirable as they increase processing costs.

A plurality of the green refractory shell molds (sans patterns) then typically are loaded into a batch or continuous oven heated by combustion of gas or oil and heated to a temperature of 1600°F to 2000°F. Alternatively, the mold may be heated by a method of copending patent application Serial No. 10/241,819 filed September 10, 2002, of common assignee herewith, which describes the heating of a mold with or without surrounded mold support sand. The heated refractory molds are removed from the oven and molten metal or alloy is cast into them.

The trend in investment casting is to make the refractory shell mold as thin as possible to reduce the cost of the mold as described above. The use of thin shell molds has required the use of support media to prevent mold failure as described by Chandley et. al. US Patent 5 069 271. The '271 patent discloses the use of bonded ceramic shell molds made as thin as possible such as less than 0.12 inch in thickness. Unbonded support particulate media is compacted around the thin hot refractory shell mold after it is removed from the preheating oven. The unbonded support media acts to resist the stresses applied to the shell mold during casting so as to prevent mold failure.

Thin shell molds however, are more prone to cracking during the pattern removal operation, such as the high pressure steam autoclave or flash fire pattern removal operation mentioned above, wherein the pattern is melted out of the, shell mold.

FR 1,117,655 discloses a method for removing wax from a mold, wherein vapor acts on the wax.

SU 1 256 848 A1 discloses a device for removing a modeling mass from a form.

GB 2 335 157 A discloses a method of making a ceramic shell mold, comprising the step of heating the mold, disposable pattern and a disposable runner to remove the disposable pattern and disposable runner from the mold.

US 5,372,177 discloses a flash fire furnace useful for de-waxing an investment casting ceramic mold structure.

The present invention provides a method of removing a fugitive pattern from a bonded refractory mold in a manner that reduces cracking of the mold.

### Summary of the Invention

The present invention is defined by the method of claim 1.

An embodiment of the present invention provides a method of removing a fugitive pattern, such as wax or other meltable pattern material, residing in a refractory mold by discharging condensable vapor, such as steam, inside the mold to contact and melt the pattern while the exterior of the mold is subjected to a non-condensing gas atmosphere, such as ambient air, outside of the mold. The condensed vapor and melted pattern material are drained out of the mold.

A pressure differential between the condensable vapor inside of the mold and the non-condensing gas atmosphere outside of the mold is small enough as to prevent the condensable gas from exiting outside the mold exterior and the non-condensing gas from entering the mold cavity. The condensable vapor inside of the mold and the gas atmosphere outside of the mold preferably are at substantially the same pressure to this end. In this way, when steam is used as the preferred condensable vapor, the steam is condensed inside the mold where the steam has contacted the pattern while the exterior of the mold remains dry. The condensable vapor can be discharged inside the mold at atmospheric, subatmospheric, or superatmospheric pressure depending upon the melting point of the pattern material.

In a preferred embodiment of the present invention, steam or other condensable vapor is discharged initially inside a hollow sprue of a pattern assembly to melt the sprue and then to proceed to melt the patterns of the pattern assembly. The hollow sprue can be preformed or, alternatively, can be formed in-situ in a solid precursor sprue of the pattern assembly while it resides in the mold by relative movement of a steam discharge tube and the solid precursor sprue.

In another preferred embodiment of the invention, a method is provided for removing a fugitive pattern from a refractory mold residing in a particulate media. The method involves discharging steam or other condensable vapor inside the mold to contact and melt the pattern while an exterior of the mold contacts the particulate media and is subjected to a non-condensing gas (e.g. steam-free) atmosphere, condensing vapor inside the mold where it contacts the pattern while the exterior of the mold and the particulate media therearound are subjected to a non-condensing gas atmosphere, and draining the melted pattern material and condensed vapor out of the mold.

In an apparatus embodiment of the invention, steam or other condensable vapor is supplied from a source to a discharge tube that is positionable inside the mold and/or pattern sprue to discharge steam or condensable vapor at substantially atmospheric, subatmospheric or superatmospheric pressure therein.

The invention is advantageous to remove one or more fugitive patterns residing in a metal casting refractory mold, which may have any mold wall thickness and which may be unsupported or supported by exterior particulate media therearound. The invention is further advantageous to remove one or more fugitive patterns while avoiding saturating the mold wall with steam or other condensate, which may have adverse effects on the binder used to fabricate the mold. The invention may be practiced to reduce mold cracking during pattern removal and to remove pattern material from molds where steam cannot readily access the exterior of the mold wall such as when the mold is supported with particulate support media.

These and other advantages of the invention will become apparent from the following detailed description taken with the following drawings.

### Description of the Drawings

Figure 1 is a schematic view of a refractory investment casting shell mold having fugitive patterns to be removed pursuant to an embodiment of the invention by discharging atmospheric pressure steam from a steam discharge tube shown positioned inside a hollow sprue of a pattern assembly residing inside the mold.
Figure 2 is a schematic view of the refractory investment casting shell mold of Figure 1 with the hollow sprue of the fugitive pattern assembly already removed by melting and with the individual gates and patterns being melted and removed.
Figure 3 is similar to Figure 2 after the patterns have been completely removed from the shell mold.
Figure 4 is an enlarged view of an individual pattern of Figure 2 illustrating removal of the pattern.
Figure 5 is similar to Figure 1 but shows a pattern assembly having a solid sprue with the steam discharge tube being moved into the solid sprue to form in-situ a hollow sprue therein.
Figure 6 is a schematic view of a refractory investment casting shell mold having fugitive patterns to be removed pursuant to an embodiment of the invention wherein the mold is exteriorly supported by a particulate support media therearound.
Figure 7 is similar to Figure 1 and shows a refractory investment casting shell mold having fugitive patterns to be removed pursuant to another embodiment of the invention by discharging steam at superatmospheric or subatmospheric pressure from a steam discharge tube shown positioned inside a hollow sprue of a pattern assembly residing inside the mold.

### Description of the Invention

The present invention involves a method of removing one or more fugitive patterns residing inside of a refractory mold. The method is especially useful to remove one or more fugitive patterns from inside a gas permeable "lost wax" investment casting ceramic shell mold, although the invention is not so limited as it can be practiced to remove one or more fugitive patterns from other types of refractory metal casting molds which have one or more fugitive patterns therein, which may have any mold wall thickness, and which may be unsupported or supported by exterior particulate media therearound. When steam is used as a preferred condensable vapor, the invention can be practiced to remove one or more fugitive patterns that may comprise conventional wax patterns or other pattern materials that are melted at a temperature below the boiling point of water (e.g. about 212 degrees F) under the particular ambient atmospheric pressure conditions present during the pattern removal operation.

Another embodiment of the invention also can be practiced to remove one or more fugitive patterns that may comprise conventional wax patterns or other pattern materials that are melted at a temperature above the boiling point of water by using superatmospheric steam to this end during the pattern removal operation pursuant to another embodiment of the invention described below. Still another embodiment of the invention can be practiced using subatmospheric pressure steam to remove one or more fugitive patterns that may require lower temperatures to melt them.

Alternatively in practicing the invention, the steam can be replaced by a condensable vapor of another suitable material, such as for purposes of illustration and not limitation mineral spirits having a boiling point of about 300 degrees F, wherein the vapor can be condensed and give up heat to the fugitive pattern when it makes contact with the pattern for pattern melting purposes.

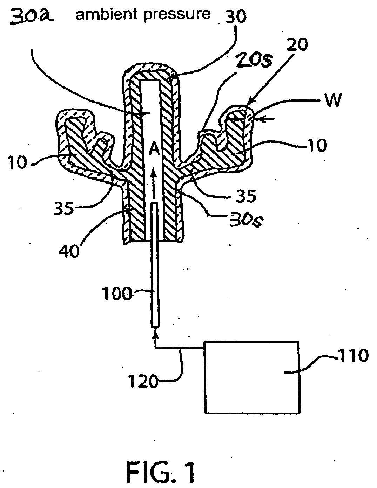

For purposes of illustration and not limitation, a method embodiment of the present invention will be described below in connection with Figures 1-4 with respect to removing a plurality of wax patterns 10 attached by respective gate 35 to a central hollow sprue 30 of a pattern assembly 40 from inside of a "lost wax" investment casting shell mold 20. In Figure 1, the hollow sprue 30 comprises a preformed wax sprue having axially elongated interior chamber 30a and having the patterns 10 attached by wax welding or fastening technique to its exterior surface 30s. For purposes of illustration and not limitation, the wax sprue 30 can be preformed to have the interior chamber 30a by molding, extrusion, by initially forming the sprue on a cylindrical or other shape mandrel which is subsequently removed by heating the mandrel and thus adjacent wax to allow mandrel to be physically withdrawn, by drilling a solid wax sprue, or by any other suitable technique.

Although two patterns 10 are shown in Figure 1, those skilled in the art will appreciate that additional patterns 10 typically are attached about the sprue 30 at the same location as patterns 10 but are out of view in Figure 1 as a result of its being a sectional view. Moreover, additional patterns 10 can be attached by gates about the sprue 30 at other axial locations along its length (e.g. above the patterns 10 shown in Figure 1) as is well known and shown for example in US Patent 5 069 271, the teachings of which are incorporated herein by reference.

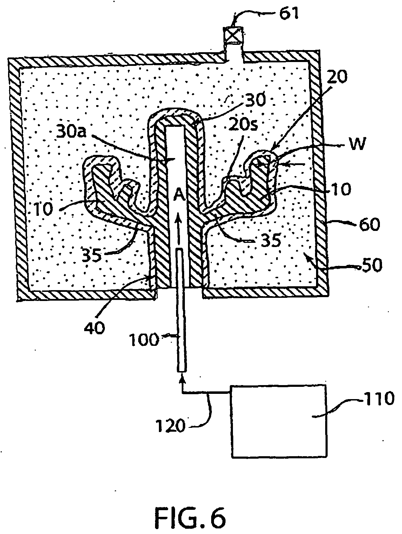

Referring to Figure 1, a "lost wax" investment casting shell mold 20 is shown invested on a plurality of wax patterns 10 attached by gates 35 about a central wax sprue 30 by the conventional "lost wax" process for making shell molds as described, for example, in US Patent 5 069 271, wherein the pattern assembly 40 including the patterns 10 attached by gates 35 to hollow sprue 30 is repeatedly dipped in a refractory slurry having a binder, stuccoed with coarse refractory stucco particles, and dried to build up the shell mold on the pattern assembly. The patent describes a gas permeable thin wall shell mold having a mold wall thickness of about 1/8 inch or less. Such a thin wall mold 20 as described in the patent can be supported in a casting container 60 by a particulate support media 50 (e.g. ceramic particulates) as shown in Figure 6 during the pattern removal operation. The invention is not limited to practice with such a thin wall shell mold supported by a particulate media therearound and, instead, can be practiced with a refractory mold of any mold wall thickness, whether exteriorly supported by particulate support media or whether unsupported as shown in Figure 1.

The shell mold 20 is shown inverted (i.e. oriented upside down) to allow the melted pattern material and condensed steam to drain by gravity from the lower end of the sprue 30. The mold 20 can be positioned in other orientations that facilitate drainage of the melted pattern material and condensed steam out of the mold. Moreover, the mold 20 may be moved during the pattern removal operation in a manner that facilitates drainage of the melted pattern material and condensed steam out of the mold.

Referring to Figure 1, a steam discharge tube 100 is shown positioned in the elongated chamber 30a of the hollow sprue 30 of the pattern assembly 40 to discharge a stream (represented by the arrow "A") of steam at substantially atmospheric pressure inside the hollow sprue 30 of the pattern assembly 40 to contact and melt the wax pattern assembly while the exterior surface 20s of the mold 20 is subjected to substantially ambient atmospheric air pressure(represented by "ambient pressure"). The ambient air forming a non-condensing gas atmosphere about the mold 20 in Figure 1 can be at ambient temperature or can be refrigerated relative to ambient temperature. A typical wax material from which the pattern assembly 40 is made melts and becomes quite fluid at about 180 degrees F for purpose of illustration and not limitation. The steam at substantially atmospheric pressure is generated in a steam source 110, which may comprise a conventional steam generator commercially available as Model LB240 from The Electro Steam Generator Corp. The steam flows from the steam generator or source 110 through a supply tube 120 to the steam discharge tube 100. Flow of the steam from the source or generator 110 can be assisted by adjusting the pressure in the steam generator so that adequate steam will flow through the pipe into the mold to replace the amount of steam that has condensed.

The steam at substantially atmospheric pressure discharged in the chamber 30a at a sufficiently high flow rate to displace air from the chamber 30a and progressively contacts and melts the pattern material of the wax sprue 30 and then the gates 35 and patterns 10. The flow rate of the steam discharged into the chamber 30a may be varied during removal of the sprue and patterns depending upon the rate of condensation of the steam inside the mold. This rate will be dependant upon the surface area of the wax exposed to the steam at that point during de-waxing, and the size of the mold. When multiple rows of patterns and gates are attached to the sprue along its length, the steam progressively melts the pattern material of each pattern uniformly from the gate and sequentially proceeding into the pattern

In practice of the invention, the wax sprue 30 may not be present or may be removed by other means prior to removal of the patterns 10 by contact with the steam. That is, if only patterns 10 are present in shell mold 20 having an empty central sprue type passage, then the steam discharge tube 100 is positioned to discharge the steam inside the mold 20 to contact and melt only patterns 10 and any gates 35 associated therewith.

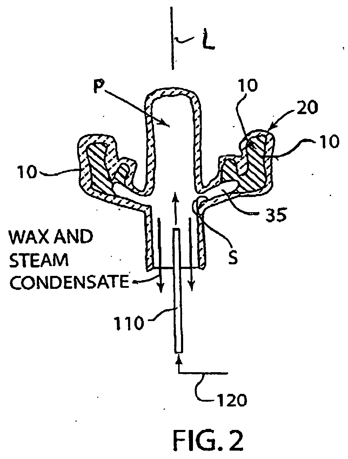

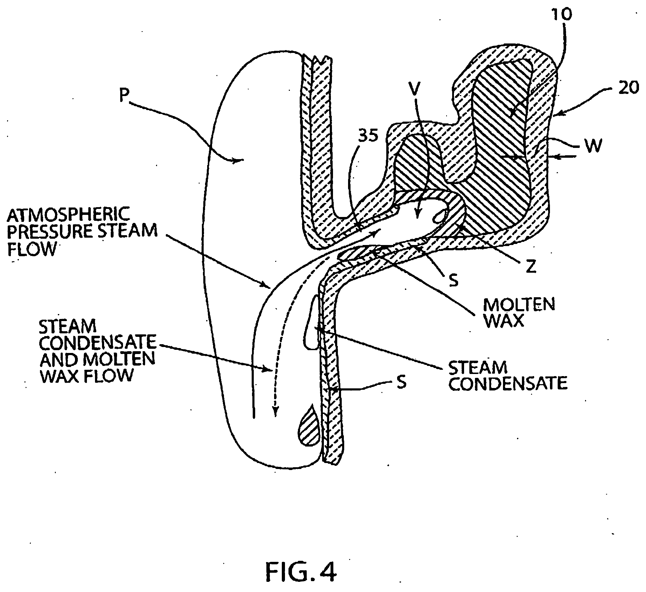

Figures 2 and 4 illustrate the pattern removal process after the central hollow sprue 30 has been melted and removed and while a gate 35 and pattern 10 are being melted and removed. The steam is shown being drawn toward the gate 35 and associated pattern 10 as the steam condenses where the steam has melted the wax pattern material. In particular, as the steam condenses at the surface of the gate and pattern, a relative lower pressure is generated at region V proximate where the gate and/or pattern material is melted to cause fresh downstream steam to flow toward the region of the gate and pattern that has melted. The liquid wax material that has melted soaks partially into the inner mold wall surface as illustrated at surface region S and acts as a barrier to prevent steam condensate from soaking through the thickness of the mold wall W. Moreover, the presence of atmospheric air pressure on the exterior surface 20s of the mold 20 provides no driving force to cause the steam condensate to pass through the mold wall, thereby avoiding saturation of the mold wall with steam condensate and the adverse effects on the binder present in the mold wall. During the pattern removal operation, the exterior surface 20s of the mold exposed to ambient air (as a non-condensing gas atmosphere) remains dry (devoid of liquid water) as a result.

A pressure differential between the condensable vapor inside of the mold 20 and the non-condensing gas atmosphere outside of the mold 20 is small enough as to prevent the condensable gas from exiting outside the mold exterior through the gas permeable mold wall W and the non-condensing gas from entering via wall W the mold cavity occupied by the fugitive pattern assembly being removed. The condensable vapor inside the mold and the non-condensing gas atmosphere outside of the mold preferably are at substantially the same pressure to this end.

As illustrated in Figure 4, the steam condensate and the melted wax pattern material are drained out of the mold 20 by gravity through the sprue void or passage P created when the hollow wax sprue 30 has been removed. The melted wax pattern material may be collected on or in a collection tray or container (not shown) positioned below the mold 20 in Figure 1. An axis of the mold 20, such as longitudinal axis L of the mold 20, containing the fugitive pattern can be tilted with respect to the direction of gravity during the melting of the fugitive pattern or after the fugitive pattern has been melted.

The steam at substantially atmospheric pressure is believed to produce only a small heat affected zone Z in the wax pattern such that the remaining unmelted portion of the solid wax pattern 10 is relatively unaffected by the steam, although Applicants do not wish to be bound by any theory in this regard. This small area of heated but not melted pattern material is free to thermally expand toward the melted surface, therefore resulting in little or no stress on the surrounding refractory mold. The thermal expansion of the wax inside the mold is the cause of the mold cracking during standard autoclave de-waxing.

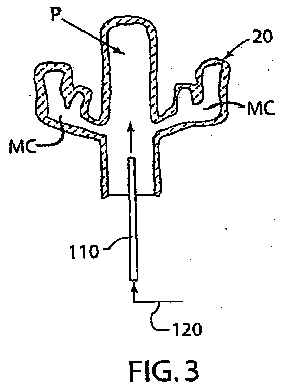

The discharge of steam from the steam discharge tube 100 inside the mold is continued until the entire pattern assembly 40 (including the hollow sprue 30 and patterns 10) is melted and removed from the mold 20, leaving an empty shell mold 20 that includes a plurality of mold cavities MC connected to the sprue passage P as shown in Figure 3. The mold then is ready to be fired at a suitable firing temperature to prepare the mold for receiving molten metal or alloy to be cast in the mold as is well known and forming no part of the invention.

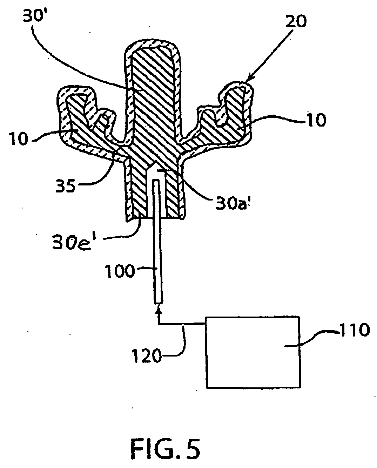

Although the chamber 30a of the hollow sprue 30 is described above as being preformed in connection with Figures 1-4, the invention is not so limited. In particularly, referring to Figure 5, a chamber 30a' can be formed in-situ in a solid wax precursor sprue 30' of the pattern assembly, Figure 5, by relatively axially moving the steam discharge tube 100 such that the steam discharged at atmospheric pressure from the tube 100 impinges against the exposed end 30e' of the solid sprue 30' and progressively melts out the chamber 30a' in-situ in the solid precursor sprue 30'. After the chamber 30a' is formed, the removal of the now hollow sprue 30' and the patterns 10 can be carried out as described above in connection with Figures 1-4. In Figure 5, like reference numerals are used for like features of Figures 1-4.

In another embodiment of the invention illustrated in Figure 6, a fugitive pattern assembly 40 is removed from a thin wall or other refractory mold 20 that is exteriorly supported or surrounded by a particulate support media 50 in a casting container 60 as described in US Patent 5 069 271. The particulate media 50 can comprise ceramic particles or grog as described in the patent. Pattern removal is effected by discharging steam at substantially atmospheric pressure from the steam discharge tube 100 inside the hollow sprue 30 of the pattern assembly 40 to contact and melt the hollow sprue 30 and then the patterns 10 as described in connection with Figures 1-4. The exterior surface 20s of the mold 20 contacts the particulate media 50 and is subjected to substantially ambient atmospheric pressure via a vent-to-atmosphere 61 on the casting container 60 during pattern removal. The exterior mold surface 20s and the particulates media 50 remain dry (devoid of liquid water) as a result of the melted wax soaking partially into, the mold wall W as described above with respect to Figures 1-4 and preventing steam condensate from soaking through the mold wall thickness.

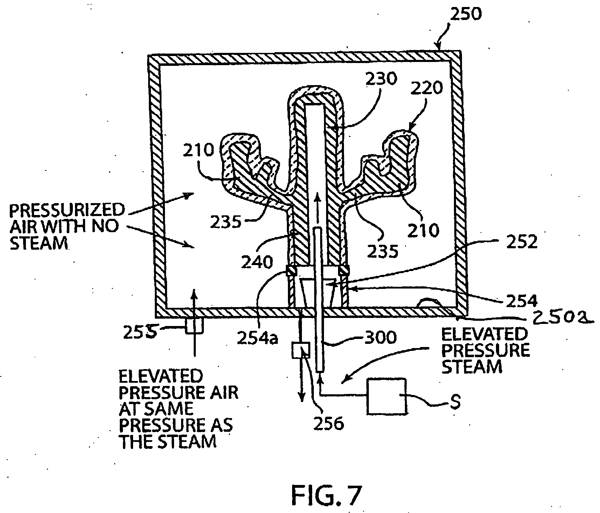

For purposes of further illustration and not limitation, another method embodiment of the present invention shown in Figure 7 will be described below wherein superatmospheric or subatmospheric pressure steam is discharged inside the mold to remove the pattern assembly 240 having a plurality of wax patterns 210 attached by respective gate 235 to central hollow sprue 230 from inside of "lost wax" investment casting shell mold 220. Use of superatmospheric pressure steam while the exterior of the mold is subjected to non-condensing gas at substantially the same superatmospheric pressure permits an increase in the heat capacity per unit volume of the steam as well as enables the melting of higher melt point pattern materials. Use of subatmospheric pressure steam while the exterior of the mold is subjected to noncondensing gas at substantially the same subatmospheric pressure enables melting and removal of pattern materials that, for example, require lower temperatures. The following method embodiment will be described using superatmospheric pressure steam, although the method embodiment may also alternatively use subatmospheric pressure steam instead.

The mold 220 is disposed inside of a pressure vessel 250 over a collection basin 252 to collect and contain melted wax and steam condensate exiting from the mold during the pattern removal operation. The pressure vessel 250 may comprise a casting container of the type that includes particulate support media about the mold 220 as illustrated in Figure 6. Alternately, the pressure vessel 250 may be devoid of the particulate support media; i.e. empty with only the shell mold therein. The pressure vessel 250 can be formed by a suitable pressure resistant material such as steel and configured as a typical conventional pressure. vessel. A casting chamber 60 and mold contained therein as shownin Fig 6 can also be placed inside a separate pressure vessel 250 for superatmospheric pressure de-waxing.

A seal 254 is provided between the mold 220 and the pressure vessel wall 250a to substantially prevent mixing of gas from the region interior of the seal 254 to the exterior of the seal 254. The seal 254 can comprise a steel tubular member having a rubber or other type seal 254a for sealing to the mold 220.

Steam at superatmospheric pressure is discharged inside the mold 220 by a steam discharge tube 300 connected to a source S of the superatmospheric pressure steam, such as the previously described steam generator and extending through an opening in wall 250a. Simultaneously to the discharge of the superatmospheric pressure steam inside the mold 220, air pressure at substantially the same pressure as the steam pressure inside the mold is provided in the pressure vessel 250 via an inlet 255. The inlet 255 for the superatmospheric air pressure is connected to a source of compressed air, such as an air compressor; for example, Kaeser model SP25 compressor. This method embodiment thus involves discharging steam inside the mold 220 to contact and melt the pattern material while the exterior of the mold 220 is subjected to a steam-free gas atmosphere outside of the mold wherein the steam inside the mold and the steam-free atmosphere outside of the mold are at substantially the same pressure. The steam and corresponding air (or other gas) pressure may be adjusted to any pressure (and therefore temperature) appropriate for the rapid melting of the pattern material.

The superatmospheric pressure inside the pressure vessel can be provided by a gas other than air such as, for example, nitrogen, inert gas, or other gas at the desired superatmospheric pressure substantially equal to that of the steam inside the mold.

An air bleed valve 256 is provided on the pressure vessel wall 250 so as to reside in the region inside the seal 254 to bleed the air that was initially inside the mold 220 from the region inside the seal 254.

The pattern removal operation of the embodiment of Figure 7 proceeds as described above with respect to steam discharged atmospheric pressure inside the mold 20 wherein the superatmospheric steam contacts the solid wax material of the pattern assembly and condenses. More heat is delivered to the wax surface in this embodiment of the invention since the superatmospheric steam is at a higher temperature when compressed. A slightly reduced pressure is formed at the wax surface when the steam condenses, which draws more steam into contact with the wax surface to facilitate the pattern removal operation. Molten wax from the wax surface and steam condensate flows out of the mold cavity and into the wax and condensate collection basin 252. De-waxing action occurs only internally in the mold 220 in an orderly manner from the sprue 230 to the gate 235 and then into the wax patterns 210. The mold-to-pressure vessel seal 254a results in no steam being applied to the exterior of the mold 220 in the pressure vessel 250. A steam-free atmosphere is thereby provided in the pressure vessel 250.

The invention is advantageous to remove one or more fugitive patterns from a metal casting refractory mold, which may have any mold wall thickness and which may be unsupported or supported by exterior particulate media therearound. The invention is further advantageous to remove one or more fugitive patterns while avoiding saturating the mold wall with steam condensate. The invention may be practiced to reduce mold cracking during pattern removal and to allow the use of thinwalled molds without mold cracking.

## Claims

1. A method of removing a fugitive pattern from inside a refractory mold, wherein the mold is a gas permeable ceramic shell mold, comprising discharging condensable vapor inside the mold to contact and melt the pattern material while an exterior of the mold is subjected to a non-condensing gas atmosphere outside of the mold, condensing said condensable vapor inside the mold where it contacts and melts the pattern while the exterior of the mold remains free of condensed vapor, and draining the melted pattern material and condensed vapor out of the mold, wherein a pressure differential between the condensable vapor inside of the mold and the non-condensing gas atmosphere outside of the mold is small enough as to prevent the condensable gas from exiting through the gas permeable mold wall to outside the mold exterior and the non-condensing gas from entering a mold cavity in the mold.

2. The method of claim 1, wherein the condensable gas and the non-condensing gas atmosphere are at the same pressure.

3. The method of claim 1 or 2, wherein the condensable vapor comprise steam.

4. The method of one of claims 1 to 3, wherein the non-condensing gas is air.

5. The method of one of claims 1 to 4, wherein the condensable vapor is supplied from a source to a discharge tube from which it is discharged inside the mold.

6. The method of one of claims 1 to 5, wherein the condensable vapor is discharged inside the mold at atmospheric pressure.

7. The method of one of claims 1 to 6, wherein the condensable vapor is discharged inside the mold at superatmospheric or subatmospheric pressure and a non-condensing gas at the same superatmospheric or subatmospheric pressure is provided exterior of the mold in a vessel containing the mold.

8. The method of claim 7 including preventing the condensable vapor from entering the vessel exterior of the mold using a seal between the mold and the vessel.

9. The method of one of claims 1 to 8, wherein the fugitive pattern comprises wax.

10. The method of one of claims 1 to 9, wherein an axis of the mold containing the fugitive pattern is tilted with respect to the direction of gravity during the melting of the fugitive pattern or after the fugitive pattern has been melted.

11. The method of one of claims 1 to 10 including initially discharging the condensable vapor inside a hollow sprue of the pattern.

12. The method of claim 11, wherein the hollow sprue is preformed in the fugitive pattern prior to the discharging of the condensable vapor.

13. The method of claim 11, wherein the hollow sprue is formed by condensable vapor discharged against an exposed end of a solid sprue.

14. The method of claim 13, wherein a condensable vapor discharge tube and the pattern residing in the mold are relatively moved to form the hollow sprue.

15. The method of claim 14, wherein the discharge tube is moved.

16. The method of one of claims 1 to 15, wherein the exterior of the mold is surrounded by a support particulate media in a container.

17. The method of one of claims 1 to 16, wherein the exterior of the mold is not surrounded by a support particulate media.

18. The method of one of claims 1 to 17, wherein a fugitive pattern is removed from a refractory mold residing in a particulate media, comprising discharging condensable vapor inside the mold to contact and melt the pattern material while an exterior of the mold contacts the particulate media which is subjected to a non-condensing gas atmosphere outside of the mold wherein said condensable vapor inside the mold and said atmosphere outside of the mold are at the same pressure, condensing said condensable vapor inside the mold where it contacts and melts the pattern while the exterior of the mold and the particulate media remain free of condensed vapor, and draining the melted pattern material and condensed vapor out of the mold.

19. The method of one of claims 1 to 18, wherein a fugitive pattern connected to a hollow fugitive sprue from inside of a gas permeable refractory mold is removed, comprising discharging condensable vapor inside the hollow sprue of the pattern to melt fugitive material of the sprue and then inside the mold to melt the fugitive material of the pattern while an exterior of the mold is subjected to a non-condensing gas atmosphere outside of the mold wherein said condensable vapor inside the mold and said atmosphere outside of the mold are at the same pressure, condensing said condensable vapor inside the mold where it contacts the fugitive material while the exterior of the mold remains free of condensed vapor, and draining the melted fugitive material and condensed vapor out of the mold.

20. The method of claim 19, wherein the hollow sprue is formed by condensable vapor discharged against an exposed end of the solid fugitive sprue.

21. The method of claim 20, wherein a condensable vapor discharge tube and the pattern residing in the mold are relatively moved to form the hollow sprue.

22. The method of claim 21, wherein the sprue is removed before the application of condensable vapor to the inside of the mold allowing the condensable vapor to immediately contact the pattern material exposed after removal of the sprue.

## Patentansprüche

1. Ein Verfahren zum Entfernen eines flüchtigen Modells aus dem Inneren einer feuerfesten Form, wobei die Form eine gaspermeable keramische Schalenform ist, umfassend das Abgeben von kondensierbarem Dampf im Inneren der Form, um das Modellmaterial zu kontaktieren und zu schmelzen, während ein Äußeres der Form einer nicht-kondensierenden Gasatmosphäre außerhalb der Form ausgesetzt wird, Kondensieren des kondensierbaren Dampfs im Inneren der Form, wo dieser das Modell kontaktiert und schmelzen lässt, während das Äußere der Form frei von kondensiertem Dampf bleibt, und Ableiten des geschmolzenen Modellmaterials und des kondensierten Dampfs aus der Form, wobei eine Druckdifferenz zwischen dem kondensierbaren Dampf im Inneren der Form und der nicht-kondensierenden Gasatmosphäre außerhalb der Form klein genug ist, um einen Austritt des kondensierbaren Gases durch die gaspermeable Formwandung hindurch an die Außenseite des Formäußeren und einen Eintritt des nicht-kondensierenden Gases in eine Formkavität in der Form zu verhindern.

2. Das Verfahren nach Anspruch 1, wobei das kondensierbare Gas und die nicht-kondensierende Gasatmosphäre beim gleichen Druck liegen.

3. Das Verfahren nach Anspruch 1 oder 2, wobei der kondensierbare Dampf Wasserdampf umfasst.

4. Das Verfahren nach einem der Ansprüche 1 bis 3, wobei das nicht-kondensierende Gas Luft ist.

5. Das Verfahren nach einem der Ansprüche 1 bis 4, wobei der kondensierbare Dampf von einer Quelle zu einem Abgaberohr geführt wird, aus dem er im Inneren der Form abgegeben wird.

6. Das Verfahren nach einem der Ansprüche 1 bis 5, wobei der kondensierbare Dampf im Inneren der Form bei Atmosphärendruck abgegeben wird.

7. Das Verfahren nach einem der Ansprüche 1 bis 6, wobei der kondensierbare Dampf im Inneren der Form bei superatmosphärischem oder subatmosphärischem Druck abgegeben wird und ein nichtkondensierendes Gas beim gleichen superatmosphärischen oder subatmosphärischen Druck außerhalb der Form in einem die Form enthaltenden Behälter bereitgestellt wird.

8. Das Verfahren nach Anspruch 7, umfassend: Verhindern eines Eintritts des kondensierbaren Dampfs in den Behälter außerhalb der Form unter Verwendung einer Dichtung zwischen der Form und dem Behälter.

9. Das Verfahren nach einem der Ansprüche 1 bis 8, wobei das flüchtige Modell Wachs umfasst.

10. Das Verfahren nach einem der Ansprüche 1 bis 9, wobei eine Achse der Form, welche das flüchtige Modell enthält, während des Schmelzens des flüchtigen Modells oder nach erfolgtem Schmelzen des flüchtigen Modells bezüglich der Schwerkraftrichtung geneigt wird.

11. Das Verfahren nach einem der Ansprüche 1 bis 10, wobei das Verfahren umfasst, dass der kondensierbare Dampf zunächst im Inneren eines hohlen Eingusses des Modells abgegeben wird.

12. Das Verfahren nach Anspruch 11, wobei der hohle Einguss in dem flüchtigen Modell vorgeformt wird, bevor der kondensierbare Dampf abgegeben wird.

13. Das Verfahren nach Anspruch 11, wobei der hohle Einguss geformt wird durch kondensierbaren Dampf, der gegen ein exponiertes Ende eines massiven Eingusses abgegeben wird.

14. Das Verfahren nach Anspruch 13, wobei ein Abgaberohr für kondensierbaren Dampf und das in der Form befindliche Modell relativ zueinander bewegt werden, um den hohlen Einguss zu bilden.

15. Das Verfahren nach Anspruch 14, wobei das Abgaberohr bewegt wird.

16. Das Verfahren nach einem der Ansprüche 1 bis 15, wobei das Äußere der Form von einem stützenden partikelförmigen Medium in einem Behälter umgeben ist.

17. Das Verfahren nach einem der Ansprüche 1 bis 16, wobei das Äußere der Form nicht von einem stützenden partikelförmigen Medium umgeben ist.

18. Das Verfahren nach einem der Ansprüche 1 bis 17, wobei ein flüchtiges Modell aus einer feuerfesten Form, welche in einem partikelförmigen Medium vorliegt, entfernt wird, umfassend: Abgeben eines kondensierbaren Dampfs im Inneren der Form, um das Modellmaterial zu kontaktieren und zu schmelzen, während ein Äußeres der Form das partikelförmige Medium kontaktiert, welches einer nicht-kondensierenden Gasatmosphäre außerhalb der Form ausgesetzt wird, wobei der kondensierbare Dampf im Inneren der Form und die Atmosphäre außerhalb der Form beim gleichen Druck liegen, Kondensieren des kondensierbaren Dampfs im Inneren der Form, wo dieser das Modell kontaktiert und schmelzen lässt, während das Äußere der Form und das partikelförmige Medium frei von kondensiertem Dampf bleiben, und Ableiten des geschmolzenen Modellmaterials und des kondensierten Dampfs aus der Form.

19. Das Verfahren nach einem der Ansprüche 1 bis 18, wobei ein flüchtiges Modell, welches mit einem hohlen flüchtigen Einguss verbunden ist, aus dem Inneren einer gaspermeablen feuerfesten Form entfernt wird, umfassend: Abgeben eines kondensierbaren Dampfs im Inneren des hohlen Eingusses des Modells, um flüchtiges Material des Eingusses zu schmelzen, und dann im Inneren der Form, um das flüchtige Material des Modells zu schmelzen, während ein Äußeres der Form einer nicht-kondensierenden Gasatmosphäre außerhalb der Form ausgesetzt wird, wobei der kondensierbare Dampf im Inneren der Form und die Atmosphäre außerhalb der Form beim gleichen Druck liegen, Kondensieren des kondensierbaren Dampfs im Inneren der Form, wo dieser das flüchtige Material kontaktiert, während das Äußere der Form frei von kondensiertem Dampf bleibt, und Ableiten des geschmolzenen flüchtigen Materials und des kondensierten Dampfs aus der Form.

20. Das Verfahren nach Anspruch 19, wobei der hohle Einguss geformt wird durch kondensierbaren Dampf, der gegen ein exponiertes Ende des massiven flüchtigen Eingusses abgegeben wird.

21. Das Verfahren nach Anspruch 20, wobei ein Abgaberohr für kondensierbaren Dampf und das in der Form befindliche Modell relativ zueinander bewegt werden, um den hohlen Einguss zu bilden.

22. Das Verfahren nach Anspruch 21, wobei der Einguss vor Beaufschlagung des Inneren der Form mit kondensierbarem Dampf entfernt wird, so dass der kondensierbare Dampf das nach Entfernung des Eingusses exponierte Modellmaterial unmittelbar kontaktieren kann.

## Revendications

1. Procédé de suppression d'un motif fugitif de l'intérieur d'un moule réfractaire, dans lequel le moule est un moule à coque en céramique perméable au gaz, qui comprend la décharge de vapeur condensable à l'intérieur du moule afin de toucher et de faire fondre le matériau du motif pendant qu'un extérieur du moule est soumis à une atmosphère de gaz de non-condensation à l'extérieur du moule, la condensation de ladite vapeur condensable à l'intérieur du moule, qui touche et fait fondre le motif pendant que l'extérieur du moule reste exempt de vapeur condensée, et l'évacuation du matériau de motif fondu et de la vapeur condensée hors du moule, une différence de pression entre la vapeur condensable à l'intérieur du moule et l'atmosphère de gaz de non-condensation à l'extérieur du moule étant suffisamment faible pour empêcher le gaz condensable de traverser le moule perméable au gaz jusqu'à atteindre l'extérieur du moule, et pour empêcher le gaz de non-condensation de pénétrer dans une cavité de moule dans le moule.

2. Procédé selon la revendication 1, dans lequel le gaz condensable et l'atmosphère de gaz de non-condensation sont à la même pression.

3. Procédé selon la revendication 1 ou 2, dans lequel la vapeur condensable comprend de la buée.

4. Procédé selon l'une des revendications 1 à 3, dans lequel le gaz de non-condensation est de l'air.

5. Procédé selon l'une des revendications 1 à 4, dans lequel la vapeur condensable est fournie par une source à un tube de décharge, depuis lequel elle est déchargée à l'intérieur du moule.

6. Procédé selon l'une des revendications 1 à 5, dans lequel la vapeur condensable est déchargée à l'intérieur du moule à la pression atmosphérique.

7. Procédé selon l'une des revendications 1 à 6, dans lequel la vapeur condensable est déchargée à l'intérieur du moule à la pression super-atmosphérique ou sub-atmosphérique, et un gaz de non-condensation à la même pression super-atmosphérique ou sub-atmosphérique est fourni à l'extérieur du moule, dans un réservoir qui contient le moule.

8. Procédé selon la revendication 7, qui comprend le fait d'empêcher la vapeur condensable de pénétrer dans le réservoir à l'extérieur du moule à l'aide d'un joint entre le moule et le réservoir.

9. Procédé selon l'une des revendications 1 à 8, dans lequel le motif fugitif comprend de la cire.

10. Procédé selon l'une des revendications 1 à 9, dans lequel un axe du moule qui contient le motif fugitif est incliné par rapport au sens de gravité pendant la fusion du motif fugitif, ou après que le motif fugitif ait été fondu.

11. Procédé selon l'une des revendications 1 à 10, qui comprend la décharge initiale de la vapeur condensable à l'intérieur d'une carotte creuse du motif.

12. Procédé selon la revendication 11, dans lequel la carotte creuse est préformée dans le motif fugitif avant la décharge de la vapeur condensable.

13. Procédé selon la revendication 11, dans lequel la carotte creuse est formée par la vapeur condensable déchargée contre une extrémité exposée d'une carotte solide.

14. Procédé selon la revendication 13, dans lequel un tube de décharge de vapeur condensable et le motif qui se trouve dans le moule sont déplacés relativement afin de former la carotte creuse.

15. Procédé selon la revendication 14, dans lequel le tube de décharge est déplacé.

16. Procédé selon l'une des revendications 1 à 15, dans lequel l'extérieur du moule est entouré par une matière particulaire de support dans un conteneur.

17. Procédé selon l'une des revendications 1 à 16, dans lequel l'extérieur du moule n'est pas entouré par une matière particulaire de support.

18. Procédé selon l'une des revendications 1 à 17, dans lequel un motif fugitif est supprimé d'un moule réfractaire qui se trouve dans une matière particulaire, qui comprend la décharge de vapeur condensable à l'intérieur du moule, afin de toucher et de faire fondre le matériau du motif pendant qu'un extérieur du moule touche la matière particulaire qui est soumise à une atmosphère de gaz de non-condensation à l'extérieur du moule, ladite vapeur condensable à l'intérieur du moule et ladite atmosphère à l'extérieur du moule étant à la même pression, la condensation de ladite vapeur condensable à l'intérieur du moule, qui touche et fait fondre le motif pendant que l'extérieur du moule et la matière particulaire restent exempts de vapeur condensée, et l'évacuation du matériau du motif fondu et de la vapeur condensée hors du moule.

19. Procédé selon l'une des revendications 1 à 18, dans lequel un motif fugitif relié à une carotte fugitive creuse depuis l'intérieur d'un moule réfractaire perméable au gaz est supprimé, qui comprend la décharge de vapeur condensable à l'intérieur de la carotte creuse du motif afin de faire fondre le matériau fugitif de la carotte, puis à l'intérieur du moule afin de faire fondre le matériau fugitif du motif pendant qu'un extérieur du moule est soumis à une atmosphère de gaz de non-condensation à l'extérieur du moule, ladite vapeur condensable à l'intérieur du moule et ladite atmosphère à l'extérieur du moule étant à la même pression, la condensation de ladite vapeur condensable à l'intérieur du moule, qui touche le matériau fugitif pendant que l'extérieur du moule reste exempt de vapeur condensée, et l'évacuation du matériau fugitif fondu et de la vapeur condensée hors du moule.

20. Procédé selon la revendication 19, dans lequel la carotte creuse est formée par de la vapeur condensée déchargée contre une extrémité exposée de la carotte fugitive solide.

21. Procédé selon la revendication 20, dans lequel un tube de décharge de vapeur condensable et le motif qui se trouve dans le moule sont déplacés afin de former la carotte creuse.

22. Procédé selon la revendication 21, dans lequel la carotte est retirée avant l'application de la vapeur condensable à l'intérieur du moule, afin de permettre à la vapeur condensable de toucher immédiatement le matériau du motif exposé après la suppression de la carotte.
